# EUROPÄISCHE PATENTSCHRIFT

(11) **EP 0 903 514 B1**
(45) Veröffentlichungstag und Bekanntmachung des Hinweises auf die Patenterteilung: **02.04.2003**
(21) Anmeldenummer: 97810679.7
(22) Anmeldetag: 17.09.1997
(51) Int. Cl.: F16D 66/00, B60T 17/22

(54) **Bremsanlage von Schienenfahrzeugen mit Zustandsüberwachung**
Railway vehicle brake system with condition monitoring.
Système de freinage à surveillance d'état pour véhicules de chemin de fer.

(43) Veröffentlichungstag der Anmeldung: 24.03.1999
(73) Patentinhaber: Bombardier Transportation GmbH, 13627 Berlin (DE)
(72) Erfinder: Cortesi, Alberto, 8547 Gachnang (CH); Aeberhard, Martin, 8400 Winterthur (CH)
(74) Vertreter: Cohausz & Florack

(56) Entgegenhaltungen:
- EP-A- 0 419 207
- EP-A- 0 594 113
- WO-A-84/00407
- DE-A- 1 680 104
- DE-A- 2 114 259
- DE-A- 4 231 107
- GB-A- 2 289 765
- US-A- 4 979 391

## Beschreibung

Die Erfindung betrifft eine Bremsanlage von Schienenfahrzeugen mit Zustandsüberwachung gemäss Oberbegriff von Anspruch 1, ein Schienenfahrzeug, insbesondere ein Triebfahrzeug, mit einer derartigen Bremsanlage und ein Verfahren zum Überwachen der Bremsanlage.

Mechanische Bremsen von Schienenfahrzeugen können in der Regel nur eine beschränkte Energiemenge aufnehmen. Andauerndes Bremsen, beispielsweise aufgrund eines Bremsdefekts, hat eine thermische Überlastung und damit Schäden zur Folge, die ein erhebliches Sicherheitsrisiko darstellen. Bei klotzgebremsten Eisenbahnrädern können thermisch bedingte Eigenspannungsänderungen beim Abkühlen zum plötzlichen Bruch des Rades führen.

Daher werden Schienenfahrzeuge bezüglich unzulässigen Bremsvorgängen überwacht. Bei pneumatischen und hydraulischen Bremsorganen ist eine Überwachung durch Detektion des Drucks im Bremszylinder oder in dessen Zuführleitung möglich. Diese Art der Überwachung ist zwar kostengünstig realisierbar; mit ihr lassen sich aber nicht alle Fehlfunktionen der Bremse detektieren. Der Zustand einer angelegten Federspeicherbremse kann im Winter bei tiefen Temperaturen aufgrund eines Festfrierens unverändert bleiben, wenn ein Lösedruck korrekt eingestellt wird. Die Bremsüberwachungslogik interpretiert hinsichtlich des eingestellten Lösedrucks fälschlicherweise eine gelöste Bremsstellung.

Bei anderen bekannten Überwachungseinrichtungen wird der Bremszustand anhand der Stellung des Bremszylinders, des Bremsklotzes oder des Bremsbelags (bei Scheibenbremsen) mit Hilfe von Weggebern oder Endschalter ermittelt. Diese Einrichtungen sind relativ aufwendig und funktionieren im rauhen Bahnbetrieb vor allem bei tiefen Temperaturen oft nicht zuverlässig. Geometrieänderungen durch Abnutzung beispielsweise des Bremsklotzes erschwert zusätzlich die zweifelsfreie Feststellung des Bremszustandes.

Es sind auch Überwachungseinrichtungen denkbar, mit denen sich durch Messen der effektiven Bremskraft zwischen den Reibpartnern der Bremszustand feststellen lässt. Solche Einrichtungen sind aber in der für den Bahnbetrieb nötigen Robustheit aufwendig.

Aus der DE-A-1 680 104 ist ein Funktionsüberwachungsgerät für Bremsanlagen von Kraftfahrzeugen bekannt, mit dem drei Zustände bzw. Funktionen der Bremsanlage überwacht werden. Zum einen wird überwacht, ob die Bremsanlage sich in einer Ruhestellung befindet bzw. ob vorgeschaltete Glieder ausgefallen sind, indem in einem Bremsflüssigkeitsbehälter das Niveau der Bremsflüssigkeit überwacht wird. Ferner wird überwacht, ob die Bremsfunktion ordnungsgemäß durchgeführt wird, indem erfaßt wird, ob in die Bremsbeläge eingebettete Kontaktdrähte oder Kontaktdrähte, die mit elektrisch leitfähigen Verschleißschichten der Bremsbeläge verbunden sind, bei ordnungsgemäß ausgeführter Bremsung durch Berührung der Bremsscheibe einen Signalstromkreis schließen. Schließlich wird auch noch die Abnutzung der Bremsbeläge überwacht. Hierzu ist in den Bremsbelägen zusätzlich jeweils eine Leiterbrücke eingebettet, die bei völliger Abnutzung des zugeordneten Bremsbelages durchgeschliffen ist und den Signalstromkreis unterbricht. Alternativ zu der Leiterbrücke kann ein Kontaktdraht mit einer leitfähigen Verschleißschicht des Bremsbelages verbunden sein, und zwar derart, daß bei völliger Abnutzung der leitfähigen Verschleißschicht kein Signalkreis gebildet wird. Eine Überwachung des Lösens einer Bremse durch Messung des. elektrischen Widerstands zwischen den Reibflächen der Reibpartner der Bremse ist bei dieser Funktionsüberwachung jedoch nicht vorgesehen.

In der DE-A-21 14 259 ist eine Vorrichtung für die Anzeige des Verschleißes an Reibbelägen von Reibungsbremsen beschrieben, die ein von elektrischen Strom durchflossenes und an ein elektrisches Meßinstrument angeschlossenes Widerstandselement aufweist, das zwischen der umlaufenden Reibfläche und einem Betätigungsglied für die Reibbeläge angeordnet ist und bei Verschieben des Betätigungsglieds zunehmend deformiert oder abgenutzt wird und damit seine elektrische Widerstandsgröße ändert, so daß an einer Anzeige des elektrischen Meßinstruments der Verschleißzustand des Belags direkt ablesbar ist. Diese bekannte Vorrichtung dient nicht der Überwachung des Lösens der Bremse.

Die WO-A-84/00407 offenbart eine Warnvorrichtung für Bremsanlagen von Fahrzeugen, insbesondere Schienenfahrzeugen, die den Fahrer des Fahrzeuges zum einen warnt, wenn ein Bremsbelag, der aus einem nicht metallischen Material besteht, am Schienenrad, an einer Scheibenbremse oder an einer Trommelbremse blockiert. Darüber hinaus warnt diese Vorrichtung den Fahrer, wenn der Bremsbelag einen bestimmten Verschleißzustand erreicht und einer Auswechslung bedarf. Hierzu sind Drähte und/oder Metallstreifen in den Bremsbelägen eingebettet oder daran angebracht, wobei die Drähte bzw. Metallstreifen zwei unterschiedliche Längen aufweisen. Der längere Draht bzw. Metallstreifen ist bis zur Reibfläche des Bremsbelags geführt, während der kürzere Draht bzw. Blechstreifen bei einem neuen Bremsbelag beabstandet zu dessen Reibfläche endet und das Schienenrad, die Scheibenbremse bzw. die Trommelbremse erst berührt, wenn der Bremsbelag um ein bestimmtes Maß abgenutzt ist. Eine elektrisch leitende Verbindung zwischen der einer den Fahrer warnenden Überwachungseinrichtung und der Reibfläche, die vom Schienenrad, der Scheibenbremse bzw. der Trommelbremse definiert ist, ist nicht vorgesehen. Tatsächlich sind nur die nicht metallischen Bremsbeläge mit elektrisch leitenden Kontaktdrähten bzw. Metallstreifen versehen. Dementsprechend kann bei dieser bekannten Vorrichtung das Blockieren eines Bremsbelages nur dann festgestellt werden, wenn der Bremsbelag mindestens zwei elektrisch leitfähige Kontaktdrähte bzw. Metallstreifen aufweist, die an seiner Reibfläche enden; oder, sofern die Bremsbeläge jeweils nur einen an der Reibfläche des Belages endenden, elektrisch leitfähigen Kontaktdraht bzw. Metallstreifen aufweisen, kann ein Blockleren vom Bremsbelägen nur dann festgestellt werden, wenn mindestens zwei Bremsbeläge gleichzeitig mit dem Schienenrad, der Scheibenbremse bzw. der Trommelbremse in Kontakt stehen.

Aufgabe der vorliegenden Erfindung ist es, eine Bremsanlage mit einer einfachen, kostengünstigen und robusten Einrichtung zum Überwachen des Lösens von Bremsorganen zu schaffen, die mit hoher Sicherheit den Zustand detektiert, in welchem die Bremse angelegt ist. Diese Aufgabe wird durch die in Anspruch 1 definierte Bremsanlage gelöst.

Die erfindungsgemäße Bremsanlage für Schienenfahrzeuge ist mit einer Überwachungseinrichtung zum Überwachen des Lösens einer oder mehrerer Bremsen versehen. In einem ersten Zustand, in dem die Bremse gelöst ist, bleibt ein Spalt zwischen zwei Reibflächen frei, während in einem zweiten Zustand, in dem die Bremse angelegt ist, die beiden Reibflächen miteinander in Kontakt stehen. Die beiden Reibflächen sind jeweils elektrisch leitend mit der Überwachungseinrichtung verbunden. Eine durch mechanische Komponenten des Schienenfahrzeugs gegebene elektrische Verbindung zwischen den beiden Reibflächen ist schlecht leitend ausgebildet. Die Überwachungseinrichtung erzeugt aufgrund von Messungen des elektrischen Widerstands zwischen den beiden Reibflächen Signale, die den beiden Zuständen zuordenbar sind. Außerdem umfaßt die Überwachungseinrichtung eine elektronische Auswertelogik, die derart programmierbar ist, daß ein gemessener niedriger Widerstandswert und damit der Zustand der angelegten Bremse erst dann signalisiert wird, wenn dieser Zustand länger als ein vorgegebenes minimales Zeitintervall andauert.

Die Ansprüche 2 bis 5 betreffen vorteilhafte Ausführungsformen der erfindungsgemäßen Bremsanlage. Gegenstand des Anspruchs 6 ist ein Schienenfahrzeug mit einer derartigen Bremsanlage. Die Ansprüche 7 und 8 beziehen sich auf Verfahren zum Überwachen der erfindungsgemäßen Bremsanlage.

Die erfindungsgemässe Lösung nutzt die Tatsache, dass die meisten in den Eisenbahnfahrzeugen eingesetzten Reibpartner (beispielsweise: Rad, Klotz; Bremsscheibe, Bremsbelag) elektrisch leitend sind oder mit einfachen Mitteln elektrisch leitend gemacht werden können. Bei der erfindungsgemässen Bremsanlage haben die Reibflächen, d.h. die Kontaktflächen zwischen den beiden Reibpartnern, die Funktion eines elektrischen Schalters. Ein Signal, das dem Zustand der angelegten Bremse zuordenbar ist, wird unmittelbar an der Stelle ausgelöst, an der die beim Bremsen auftretenden Reibvorgänge stattfinden; damit ist eine Fehlinterpretation durch die Überwachungseinrichtung praktisch ausgeschlossen.

Nachfolgend wird die Erfindung anhand der Zeichnungen erläutert. Es zeigen:
- Fig. 1: eine erfindungsgemässe, sehr schematisch dargestellte Anlage mit einer Klotzbremse,
- Fig. 2: eine zweite Anlage mit Scheibenbremse,
- Fig. 3: eine Schraubenverbindung mit hochohmigen Trennschichten,
- Fig. 4: eine Scheibenbremse zu einer erfindungsgemässen Bremsanlage,
- Fig. 5: eine Magnetschienenbremse und
- Fig. 6: eine Trommelbremse.

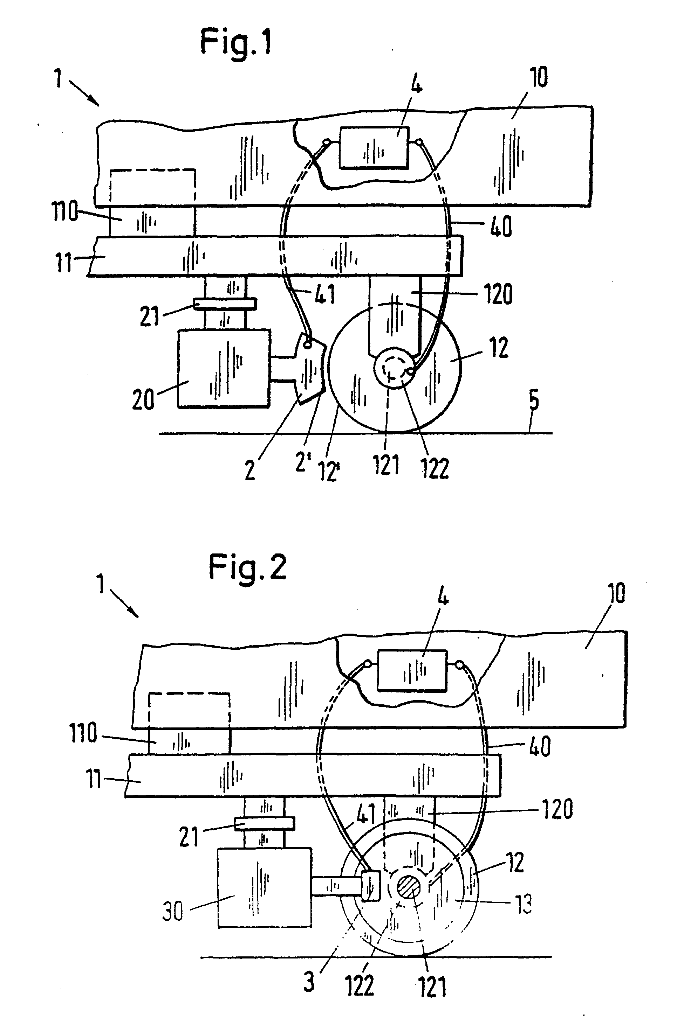

Das in Fig.1 dargestellte Schienenfahrzeug 1 umfasst folgende Teile: einen Wagenkasten 10; einen Drehgestellrahmen oder ein Fahrwerk 11; ein Rad 12 eines Radsatzes, mit Radachse 121 und Lagergehäuse 122; eine zwischen Lagergehäuse 122 und Drehgestellrahmen 11 angeordnete primäre Federung 120, die sehr vereinfacht als Kasten gezeichnet ist; eine sekundäre Federung 110, ebenfalls stark vereinfacht dargestellt, die den Drehgestellrahmen 11 mit dem Wagenkasten 10 verbindet; ferner einen Bremsklotz 2 mit einer Betätigungseinrichtung 20, die über Verbindungsmittel 21 am Drehgestellrahmen 11 befestigt ist. Die Linie 5 stellt die Oberkante einer Schiene dar.

Wie bei Schienenfahrzeugen üblich, bilden die Schiene 5, das Rad 12, der Drehgestellrahmen 11 und der Wagenkasten 10 ein gemeinsames elektrisches Potential, einerseits, weil die genannten Teile elektrisch leitend sind und andererseits, weil einzelne der Teile mittels Erdungslitzen (am Drehgestellrahmen 11, nicht dargestellt) sowie Schleifkontakten (im Lagergehäuse 122) miteinander verbunden sind. Die Bremseinheit, die die Betätigungseinrichtung 20 und den Bremsklotz 2 umfasst, bildet ein zweites elektrisches Potential. Die Verbindungsmittel 21 sind erfindungsgemäss derart ausgebildet, dass die elektrische Verbindung zwischen dem Bremsklotz 2 und dem Drehgestellrahmen 11 schlecht elektrisch leitend ist. Somit besteht bei gelöster Bremse zwischen einer Reibfläche 2' des Bremsklotzes 2 und einer Reibfläche 12', die durch die Lauffläche des Rades 12 gebildet ist, eine schlecht leitend ausgebildete elektrische Verbindung.

Eine Überwachungseinrichtung 4, die mit den beiden Reibflächen 2' und 12' elektrisch leitend verbunden ist, stellt bei gelöster Bremse einen relativ grossen Widerstand fest, der im wesentlichen durch den Widerstand des Verbindungsmittels 21 gegeben ist. Bei angelegter Bremse registriert die Überwachungseinrichtung 4 praktisch einen Kurzschluss. Aufgrund einer Widerstandsmessung kann somit ein Signal erzeugt werden, das über den Bremszustand informiert.

Gemäss Fig.1 ist die Überwachungseinrichtung 4 durch ein Kabel 41 mit dem Bremsklotz 2 verbunden, das vorteilhafterweise an einem Halter des Bremsklotzes 2 befestigt ist (nicht dargestellt). Der elektrische Anschluss zu der zweiten Reibfläche 12' erfolgt über ein Kabel 40 zum Lagergehäuse 122 und von dort weiter über das metallische Rad 12. Da der Wagenkasten 10 mit dem Rad 12 bereits elektrisch verbunden ist, genügt es an sich, wenn das Kabel 40 lediglich eine Verbindung zum Wagenkasten 10 herstellt.

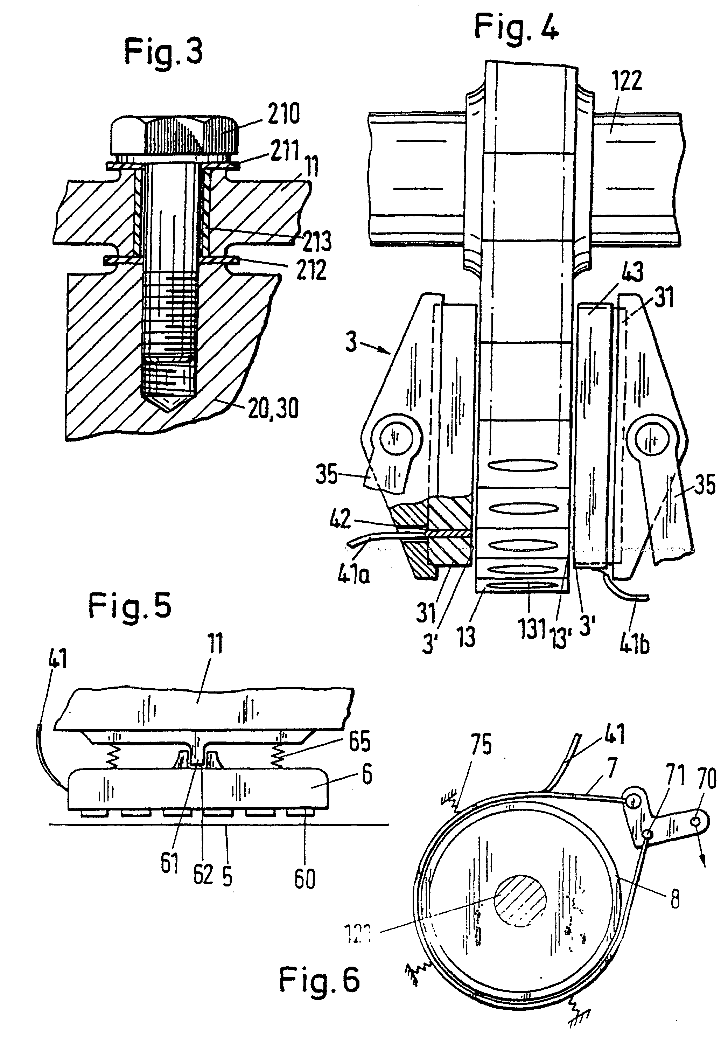

Bei dem Fahrzeug 1 der Fig.2 ist die Klotzbremse durch eine Scheibenbremse ersetzt, die eine an der Radachse 121 befestigte Bremsscheibe 13, Bremsbacken 3 mit Bremsbelägen 31 (siehe Fig.4) sowie eine Betätigungseinrichtung 30 umfasst. Die Überwachung des Bremsvorgangs ist im wesentlich die gleiche wie im Beispiel der Fig.1.

Wenn der elektrische Weg vom Bremsklotz 2 bzw. Bremsbelag 31 über das Fahrwerk 11 zum Rad 12 im Vergleich zum direkten Weg zwischen den sich berührenden Reibflächen 2' und 12' einen ausreichend grossen Widerstand aufweist (beispielsweise bei Fahrwerken mit Rahmen aus Faserverbundwerkstoffen), so kann auf besondere Verbindungsmittel 21 mit isolierenden Teilen verzichtet werden.

In Fig.3 ist eine Schraubverbindung zur Befestigung der Betätigungseinrichtung 20 bzw. 30 gezeigt. Zwei Zwischenscheiben 211 und 212 sowie eine Hülse 213, die aus einem druckfesten, elektrisch isolierenden Material bestehen, bilden eine hochohmige Trennschicht zwischen einer Schraube 210 und dem Drehgestellrahmen 11. Die Schraube 210 liegen somit zusammen mit dem Bremsklotz 2 bzw. der Bremsbacke 3 auf einem gemeinsamen elektrischen Potential. Die Schraube 210 kann auch mit einer isolierenden Beschichtung versehen sein, so dass auf eine Hülse 213 verzichtet werden kann. Anstelle der Zwischenscheiben 211 können Unterlagsscheiben aus Stahl vorgesehen sein, die mit einem isolierenden Material beschichtet sind. Eine weitere Möglichkeit ist, die Kontaktflächen des Drehgestellrahmens 11 isolierend zu beschichten.

Die Zwischenscheiben 211, 212 sind als überdimensionierte Unterlagscheiben ausgebildet. Damit wird ähnlich wie bei einem Hochspannungsisolator eine verlängerte Kriechstrecke zwischen den beiden zu isolierenden Teilen erzielt. Verschmutzungen, beispielsweise durch Ablagerungen von elektrisch leitendem Bremsstaub, haben auf diese Weise nur kleine Veränderungen des Widerstands zur Folge, die das Detektieren des Zustands der geöffneten Bremse nicht beeinträchtigt.

Kriechströme können auch mit einem isolierenden Material verhindert werden, beispielsweise mit einem Silikongummi, der am Rand der Zwischenscheiben 211, 212 aufgetragen wird, wobei der Rand von den Zwischenscheiben nicht überragt wird.

Die Ausbildung zweier elektrischer Potentiale durch schlecht leitende Trennschichten 211, 212, 213 bei dem Verbindungsmittel 21 kann auch durch isolierende Teile an anderen Stellen erreicht werden, beispielsweise durch eine Isolation zwischen Klotz und Klotzhalter. Bei Verwendung von Kunststofflagerstellen und/oder nicht leitenden Hebeln aus faserverstärktem Kunststoff ergeben sich ebenfalls schlecht leitende Verbindungen zwischen den Reibflächen 2', 12'.

Fig.4 ist die Abbildung einer Scheibenbremse (Scheibe 13, Lüftungskanäle 131), die in radialer Draufsicht senkrecht zur Radachse 121 dargestellt ist. Zwei Bremsbacken 3 mit Bremsbelägen 31 und Reibflächen 3' werden beim Bremsen mit Hebeln 35 zangenartig auf Reibflächen 13' der Scheibe 13 gepresst. Die Bremsbeläge 31 sind in der Regel aus einem Kunststoff hergestellt, der elektrisch schlecht leitend ist. Kunststoffe können durch geeignete Zusatzstoffe elektrisch leitend gemacht werden.

Wie in Fig.4 gezeigt ist, kann die elektrische Verbindung auch mittels eines metallischen Stifts 42 hergestellt werden, der in den Bremsbelag 31 eingefügt ist und der beim Bremsen zusammen mit dem Kunststoff auf der Reibfläche 13' abgerieben wird. Es ist von Vorteil, wenn ein zur Überwachungseinrichtung 4 führendes Verbindungskabel 41a (41 in Fig.2) nur mit dem Stift 42 in einer gut leitenden elektrischen Verbindung steht; in diesem Fall brauchen die Befestigungsmittel 21 der Betätigungseinrichtung 30 nicht isolierend ausgebildet zu sein.

Statt mit einem Stift 42 kann der elektrische Kontakt auch mit einem zusätzlichen elektrischen Leiter 43 in Form einer metallischen Ummantelung oder Beschichtung hergestellt werden, die an ein Verbindungskabel 41b (41 in Fig.2) angeschlossen wird. Wie bei der Ausführungsform mit dem Stift 42 ist es auch hier von Vorteil, wenn der zusätzliche Leiter 43 keine elektrische Verbindung zum Halter des Bremsbelags 31 herstellt.

Die Überwachung der Scheibenbremse kann auch durch Messen des Widerstandes zwischen den beiden Bremsbelägen 31, d.h. über die beiden Verbindungskabel 41a und 41b durchgeführt werden.

Fig.5 zeigt eine Magnetschienenbremse 6 (Elektromagnete 60), die mittels einer Federaufhängung 65 an dem Drehgestellrahmen 11 angebracht ist. Auch bei dieser Bremse 6 lässt sich über ein Verbindungskabel 41 die erfindungsgemässe Bremsüberwachung durchführen, wenn die Federaufhängung 65 und ein Mitnehmer 61 geeignet ausgebildet sind, so dass diese schlecht leitende Verbindungen darstellen. Beim Bremsen wird der Mitnehmer 61 gegen eine nutförmige Aussparung 62 gedrückt. Daher kann auch der Kontakt zwischen Mitnehmer 61 und Aussparung 62 zur Überwachung des Bremszustandes genutzt werden.

Auch bei einer Trommelbremse mit einer Trommel 8 und einem Bremsband 7 (mit Kniehebel 70 und Angelpunkt 71) - siehe Fig.6 - kann die erfindungsgemässe Überwachungseinrichtung verwendet werden. Dabei muss dafür gesorgt werden, beispielsweise mittels Federn 75, dass es bei gelöster Bremse nicht zu Kontakten zwischen dem Band 7 und der Trommel 8 kommt.

Der Isolationsgrad der Verbindungsmittel 21 muss nicht hochohmig sein. Es ist besonders vorteilhaft, wenn die Differenz der Widerstände kurz vor dem Anlegen des Bremsklotzes 2 bzw. Bremsbelags 31 und bei angelegter Bremse ausgewertet werden. Auch vergleichsweise geringe Ohmdifferenzen erlauben so eine eindeutige Aussage über den Bremszustand.

Bei einem vorteilhaften Verfahren der erfindungsgemässen Bremsanlage ist es vorgesehen, dass durch die Überwachungseinrichtung ein gemessener niedriger Widerstandswert und damit der Zustand der angelegten Bremse erst dann signalisiert wird, wenn dieser Zustand länger als ein vorgegebenes minimales Zeitintervall andauert. Zweckmässigerweise wird eine elektronische Auswertelogik der Überwachungseinrichtung so programmiert, dass eine Warnung über den Bremszustand erst nach Detektion von Widerstandsdifferenzen über einige Sekunden erfolgt. Damit kann beispielsweise verhindert werden, dass eine kurzzeitige Berührung der Reibflächen 2' und 12', wie dies beim Durchfahren einer Weiche vorkommen kann, zu einer unnötigen Warnung führt.

Die elektronische Auswertelogik der Bremsanlage kann so programmiert werden, dass für jede Bremse Zeitintervalle mit angelegter Bremse erfasst und auswertet werden. Es werden dabei Werte berechnet und angezeigt, die den Wärmemengen entsprechen, die durch die Bremse oder Teile der Bremse aufgenommen beziehungsweise abgegeben worden und in ihnen momentan gespeichert sind, wobei bezüglich der gespeicherten Wärme rechnerisch berücksichtigt wird, wieviel Wärme durch Abkühlung (in Funktion von der Geschwindigkeit des Fahrzeugs und der errechneten momentanen Temperatur des wärmespeichernden Teils) bereits wieder abgegeben worden ist. So kann jederzeit festgestellt werden, in welchem Umfang die Bremsen noch ohne die Gefahr einer Schädigung beansprucht werden können.

Das korrekte Funktionieren der Überwachungseinheit kann zuverlässig kontrolliert werden, indem überprüft wird, ob vor und nach Betätigung der Bremse verschiedene Widerstände festgestellt werden.

## Patentansprüche

1. Bremsanlage für Schienenfahrzeuge mit einer Überwachungseinrichtung (4) zum Überwachen des Lösens einer oder mehrerer Bremsen, wobei in einem ersten Zustand, in dem die Bremse gelöst ist, ein Spalt zwischen zwei Reibflächen (2', 12') freigelassen ist, und in einem zweiten Zustand, in dem die Bremse angelegt ist, die beiden Reibflächen miteinander in Kontakt stehen, **dadurch gekennzeichnet, dass** die beiden Reibflächen jeweils elektrisch leitend mit der Überwachungseinrichtung verbunden sind, dass in mortierter Zustand eine durch mechanische Komponenten (2, 20, 21, 11, 120, 122, 121, 12) des Schienenfahrzeugs gegebene elektrische Verbindung zwischen den Reibflächen schlecht leitend ausgebildet ist und dass die Überwachungseinrichtung aufgrund von Messungen des elektrischen Widerstands zwischen den beiden Reibflächen Signale erzeugt, die den beiden Zuständen zuordenbar sind, wobei die Überwachungseinrichtung (4) eine elektronische Auswertelogik umfasst, die derart programmierbar ist, dass ein gemessener niedriger Widerstandswert und damit der Zustand der angelegten Bremse erst dann signalisiert wird, wenn dieser Zustand länger als ein vorgegebenes minimales Zeitintervall andauert.

2. Bremsanlage nach Anspruch 1, **dadurch gekennzeichnet, dass** eine Betätigungseinrichtung (20; 30) für einen Reibpartner der Bremse, insbesondere einen Bremsklotz (2) oder einen Bremsbelag (31) einer Scheibenbremse, an dem Schienenfahrzeug (1) mit Mitteln (21) befestigt ist, die hochohmige Trennschichten enthalten.

3. Bremsanlage nach Anspruch 2, **dadurch gekennzeichnet, dass** mindestens eine der Bremsen einen auf ein Rad (12) einwirkenden Bremsklotz (2) umfasst und an einem Halter für den Bremsklotz eine Kontaktstelle für die elektrische Verbindung (41) zur Überwachungseinrichtung vorgesehen ist.

4. Bremsanlage nach Anspruch 1, **dadurch gekennzeichnet, dass** mindestens eine der Bremsen eine Scheibenbremse ist und ein Bremsbelag. (31) oder deren Bremsbeläge zumindest teilweise elektrisch leitend sind oder zusätzliche elektrische Leiter (42, 43), die an oder im Bremsbelag angebracht sind, eine elektrische Leitung zur Reibfläche (3') herstellen.

5. Bremsanlage nach Anspruch 1, **dadurch gekennzeichnet, dass** mindestens eine der Bremsen eine Magnetschienenbremse (6) oder eine Trommelbremse (7, 8) ist.

6. Schienenfahrzeug (1), insbesondere Triebfahrzeug, mit einer Bremsanlage (2, 4; 3, 4) gemäß einem der Ansprüche 1 bis 5.

7. Verfahren zum Überwachen des Lösens einer Bremsanlage gemäß einem der Ansprüche 1 bis 5, **dadurch gekennzeichnet, dass** durch die Überwachungseinrichtung (4) ein gemessener niedriger Widerstandswert und damit der Zustand der angelegten Bremse erst dann signalisiert wird, wenn dieser Zustand länger als ein vorgegebenes minimales Zeitintervall andauert, und dass durch die Auswertelogik für jede Bremse Zeitintervalle mit angelegter Bremse erfasst und ausgewertet werden, derart, dass Werte berechnet und angezeigt werden, die den Wärmemengen entsprechen, die durch die Bremse oder Teile der Bremse momentan gespeichert sind.

8. Verfahren zum Überwachen des Lösens einer Bremsanlage gemäß einem der Ansprüche 1 bis 5, **dadurch gekennzeichnet, dass** durch die Überwachungseinrichtung (4) ein gemessener niedriger Widerstandswert und damit der Zustand der. angelegten Bremse erst dann signalisiert wird, wenn dieser Zustand länger als ein vorgegebenes minimales Zeitintervall andauert, und dass die Überwachungseinrichtung (4) den Widerstand zwischen den Reibflächen (2', 12'; 3', 13') kurz vor dem Anlegen der Bremse mit dem Widerstand bei angelegter Bremse vergleicht und bezüglich der Differenz dieser Widerstandswerte das dem Bremszustand entsprechende Signal erzeugt.

## Claims

1. A brake system for rail vehicles with a monitoring device (4) for monitoring the disengagement of one or more brakes, wherein a gap remains between two friction surfaces (2', 12') in a first state in which the brake is disengaged, and wherein the two friction surfaces are in contact with one another in a second state in which the brake is engaged, **characterized by** the fact that the two friction surfaces are respectively connected in an electrically conductive fashion to the monitoring device, by the fact that, in the mounted state, an electric connection produced between the friction surfaces by mechanical components (2, 20, 21, 11, 120, 122, 121, 12) of the rail vehicle is realized such that it has an inferior conductivity, and by the fact that the monitoring device generates signals that can be assigned to the two states based on measurements of the electric resistance between the two friction surfaces, wherein the monitoring device (4) comprises an electronic evaluation logic that can be programmed in such a way that a low measured resistance value and consequently the engaged state of the brake is only signaled if this state persists for longer than a predetermined minimum time interval.

2. The brake system according to Claim 1, **characterized by** the fact that an actuating device (20; 30) for the other friction surface of the brake, in particular, a brake block (2) or a brake lining (31) of a disk brake, is mounted on the rail vehicle (1) with means (21) that contain high-resistance separating layers.

3. The brake system according to Claim 2, **characterized by** the fact that at least one of the brakes comprises a brake block (2) that acts upon a wheel. (12), and by the fact that a contact point for the electric connection (41) with the monitoring device is provided on a holder for the brake block.

4. The brake system according to Claim 1, **characterized by** the fact that at least one of the brakes consists of a disk brake, wherein the brake lining (31) or brake linings of this disk brake are at least partially realized in an electrically conductive fashion or additional electric conductors (42, 43) arranged on or in the brake lining produce an electric connection with the friction surface (3').

5. The brake system according to Claim 1, **characterized by** the fact that at least one of the brakes consists of an electromagnetic rail brake (6) or a drum brake (7, 8).

6. A rail vehicle (1), in particular a traction vehicle, with a brake system (2, 4; 3, 4) according to one of Claims 1 - 5.

7. A method for monitoring the disengagement of a brake system according to one of Claims 1 - 5, **characterized by** the fact that the monitoring device (4) only signals a low measured resistance value and consequently the engaged state of the brake if this state persists for longer than a predetermined minimum time interval, and by the fact that time intervals for the engaged brake are measured and evaluated for each brake by the evaluation logic, namely in such a way that values are calculated and displayed which correspond to the quantities of heat that are instantaneously accumulated by the brake or parts of the brake.

8. A method for monitoring the disengagement of a brake system according to one of Claims 1 - 5, **characterized by** the fact that the monitoring device (4) only signals a low measured resistance value and consequently the engaged state of the brake if this state persists for longer than a predetermined minimum time interval, and by the fact that the monitoring device (4) compares the resistance between the friction surfaces (2', 12'; 3', 13') shortly before the brake is engaged with the resistance while the brake is engaged, wherein the monitoring device generates the signal that corresponds to the brake status based on the difference between these resistance values.

## Revendications

1. Dispositif de freinage pour véhicules ferroviaires avec un dispositif de contrôle (4) pour le contrôle du relâchement d'un ou plusieurs freins, un intervalle étant, dans un premier état où le frein est relâché, dégagé entre deux surfaces de frottement (2', 12') et les deux surfaces étant en contact l'une avec l'autre dans un deuxième état où le frein est serré, **caractérisée en ce que** les deux surfaces de frottement sont respectivement reliées avec conduction électrique avec le dispositif de contrôle, que, à l'état monté, une liaison électrique fournie par des composants mécaniques (2, 20, 21, 11, 120, 122, 121, 12) du véhicule ferroviaire est établie avec une mauvaise conduction électrique entre les surfaces de frottement, et que le dispositif de contrôle émet, sur la base de mesures de la résistance électrique entre les deux surfaces de frottement, des signaux qui peuvent être associés aux deux états, le dispositif de contrôle (4) comprenant une logique d'exploitation électronique qui est programmable de manière à ce qu'une valeur de résistance basse mesurée et ainsi l'état du frein serré ne soit signalée que lorsque cet état dure plus longtemps qu'un intervalle de temps minimal prédéfini.

2. Dispositif de freinage selon la revendication 1, **caractérisé en ce qu'**un dispositif d'actionnement. (20 ; 30) pour un partenaire de frottement du frein, notamment un segment de frein (2) ou une garniture de frein (31) d'un frein à disques, est fixé sur le véhicule ferroviaire (1) avec des moyens (21) qui contiennent des couches de séparation de valeur ohmique élevée.

3. Dispositif de freinage selon la revendication 2, **caractérisé en ce qu'**au moins un des freins comporte un segment (2) agissant sur une roue (12) et que sur un support pour le segment de frein est prévu un point de contact pour la liaison électrique (41) avec le dispositif de contrôle.

4. Dispositif de freinage selon la revendication 1, **caractérisé en ce qu'**au moins un des freins est un frein à disques et qu'une garniture de frein (31) ou ses garnitures de frein sont au moins partiellement conductrices électriques ou que des conducteurs électriques supplémentaires (42, 43) qui sont disposés sur ou dans la garniture de frein établissent une conduction électrique avec la surface de frottement (3').

5. Dispositif de freinage selon la revendication 1, **caractérisé en ce qu'**au moins un des freins est un frein de voie électromagnétique (6) ou un frein à tambour (7, 8).

6. Véhicule ferroviaire (1), notamment véhicule locomoteur, comportant une installation de freinage (2, 4 ; 3, 4) selon une des revendications 1 à 5.

7. Procédé pour contrôler le relâchement d'un dispositif de freinage selon une des revendications 1 à 5, **caractérisé en ce qu'**une valeur de résistance basse mesurée par le dispositif de contrôle (4) et ainsi l'état du frein serré n'est signalé que lorsque cet état dure plus longtemps qu'un intervalle de temps minimal prédéfini, et que des intervalles de temps avec le frein serré sont détectés et exploités par la logique d'exploitation pour chaque frein de manière à ce que soient calculées et affichées des valeurs qui correspondent aux quantités de chaleur qui sont stockées momentanément par le frein ou des parties du frein.

8. Procédé pour contrôler le relâchement d'une installation de freinage selon une des revendications 1 à 5, **caractérisé en ce qu'**une valeur de résistance basse mesurée par le dispositif de contrôle (4) et ainsi l'état du frein serré n'est signalée que lorsque cet état dure plus longtemps qu'un intervalle de temps minimal prédéfini, et que le dispositif de contrôle (4) compare la résistance entre les surfaces de frottement (2', 12' ; 3', 13') juste avant le serrage du frein avec la résistance une fois le frein serré et émet le signal correspondant à l'état du frein en référence à la différence de ces valeurs de résistance.
